# EUROPÄISCHE PATENTSCHRIFT

(11) **EP 2 961 638 B1**
(45) Veröffentlichungstag und Bekanntmachung des Hinweises auf die Patenterteilung: **22.03.2017**
(21) Anmeldenummer: 14700252.1
(22) Anmeldetag: 08.01.2014
(51) Int. Cl.: B60R 9/04

(54) **DACHRELINGHALTER SOWIE DACHRELINGANORDNUNG UND FAHRZEUG MIT DER DACHRELINGANORDNUNG**
ROOF RAIL RETAINER, ROOF RAIL ASSEMBLY, AND VEHICLE HAVING THE ROOF RAIL ASSEMBLY
SUPPORT DE GALERIE DE TOIT AINSI QUE SYSTÈME DE GALERIE DE TOIT, ET VÉHICULE ÉQUIPÉ D'UN TEL SYSTÈME DE GALERIE DE TOIT

(30) Priorität: 26.02.2013 DE 102013003133
(43) Veröffentlichungstag der Anmeldung: 06.01.2016
(73) Patentinhaber: Süddeutsche Aluminium Manufaktur GmbH, 89558 Böhmenkirch (DE)
(72) Erfinder: BINDER, Hans, 89558 Böhmenkirch (DE); BINDER, Ottmar, 89558 Böhmenkirch (DE); SIRRENBERG, Stefan, 42279 Wuppertal (DE); HIPPE, Marcus, 40229 Düsseldorf (DE)
(74) Vertreter: Grosse, Rainer
(86) Internationale Anmeldenummer: PCT/EP2014/050221
(87) Internationale Veröffentlichungsnummer: WO 2014/131530

(56) Entgegenhaltungen:
- EP-A2- 2 532 568
- WO-A1-2006/111228
- DE-A1- 10 239 022
- DE-U1- 8 621 340
- US-A1- 2012 248 164

## Beschreibung

Die Erfindung betrifft einen Dachrelinghalter gemäß Anspruch 1, eine Dachrelinganordnung gemäß Anspruch 21 sowie ein Fahrzeug mit einer Dachrelinganordnung gemäß Anspruch 22.

Aus der DE 10 2005 018 158 A1 ist eine als Dachleiste ausgebildete Dachreling bekannt, die eine im Wesentlichen durchgängig auf das Dach des Fahrzeugs auflegbare Anlagefläche aufweist. Die Anlagefläche weist mindestens eine Ausnehmung auf, in die ein Nutstein eingeschoben ist, von dem ein Gewindebolzen ausgeht, der in eine Befestigungsöffnung des Dach des Fahrzeugs eingesteckt wird. Die Dachleiste ist somit unmittelbar auf dem Dach des Fahrzeugs angeordnet.

Die Erfindung geht von einer anderen Situation aus, bei der die Dachreling nicht unmittelbar, sondern durch Zwischenschalten eines Dachrelinghalters am Dach eines Fahrzeugs befestigbar/befestigt ist. Mithin ist der Dachrelinghalter am Dach des Kraftfahrzeugs befestigt und an ihm wird die Dachreling, beispielsweise in Form einer Dachleiste, befestigt.

Aus der EP 2532568 A2 ist ein Dachrelinghalter mit einem Adapterbauteil bekannt, das eine Befestigungseinrichtung zur Montage an einem Dach eines Fahrzeugs aufweist. Die Befestigungseinrichtung ist ein mit Gewinde versehenes Bolzenelement, das von einem komprimierbaren Dichtungsring umgeben ist, wobei dem Bolzenelement mindestens ein Abstützelement zugeordnet ist, das einerseits mit dem Adapterbauteil verbunden ist und andererseits mindestens eine auf das Dach des Fahrzeugs auflegbare Abstützfläche aufweist.

Der Erfindung liegt die Aufgabe zugrunde, einen Dachrelinghalter zu schaffen, der fest und sicher am Dach des Fahrzeugs befestigt werden kann, ohne dass Schmutz und/oder Feuchtigkeit in das Dachinnere gelangt.

Diese Aufgabe wird durch einen Dachrelinghalter gemäß Anspruch 1 gelöst. Im Zuge dieses Patents wird bei der Erfindung als Dachreling eine Dachleiste angegeben und es wird nur ein Dachrelinghalter beschrieben. Die Erfindung ist jedoch hierauf nicht beschränkt, da als Dachreling auch eine Reling mit Füßen eingesetzt werden kann und nicht eine Dachleiste, die fußfrei mit ihrer Unterseite der Dachkontur folgt. Ferner sind der jeweiligen Reling zumeist mehrere, über die Länge der Reling verteilt angeordnete Dachrelinghalter zugeordnet. Ferner weist ein Fahrzeug zumeist zwei parallel zueinander angeordnete Dachrelings auf, auch wenn in der Anmeldung nur eine beschrieben wird. Der komprimierbare Dichtungsring, der das Bolzenelement umgibt, dient zur Abdichtung einer Befestigungsöffnung am Dach des Fahrzeugs. Beim mittels Einstecken des Bolzenelements in die Befestigungsöffnung erfolgenden Montieren des DachrelinghaIters am Dach des Fahrzeugs wird der Dichtungsring komprimiert, sodass er einerseits dichtend am Dachrelinghalter und andererseits dichtend an der Außenseite des Dachs des Fahrzeugs anliegt, wodurch die Befestigungsöffnung nach außen hin dichtend abgeschirmt wird und daher kein Schmutz und/oder keine Feuchtigkeit und so weiter in das Dach eindringen kann. Das Anpressen des Dichtungsrings ist jedoch unabhängig von der Zugkraft, mit dem das Bolzenelement am Dach des Fahrzeugs befestigt ist. Dies deshalb, weil dem Bolzenelement das mindestens eine Abstützelement zugeordnet ist, das einerseits an dem Adapterbauteil anliegt oder mit dem Adapterbauteil verbunden ist und andererseits eine auf das Dach des Fahrzeugs auflegbare Abstützfläche aufweist, sich dort also abstützt. Wird das Bolzenelement somit am Dach des Fahrzeugs festgelegt, so wirkt das Abstützelement als Abstandshalter, der ein weitergehendes Komprimieren des Dichtungsrings verhindert und ferner eine Blockbefestigung, insbesondere eine Blockverschraubung erzielt. Hierunter ist zu verstehen, dass im Bereich der Befestigungseinrichtung das Abstützelement, das Blech des Dachs des Fahrzeugs sowie mindestens ein sich im Innern des Dachs befindliches Dachunterbauteil und ein am Bolzenelement angeordnetes oder angebrachtes Element, insbesondere eine Befestigungsmutter, die auf das Gewinde des Bolzenelements geschraubt ist, sowie optional auch das Adapterbauteil "auf Block" liegen, wodurch eine auch auf Dauer konstante Haltekraft zum Halten des Dachrelinghalters wirkt. Wird zur Befestigung des Bolzenelements insbesondere eine Verschraubung vorgenommen, so lässt sich eine Blockverschraubung realisieren, bei der es nicht zu Drehmomentabfällen kommt, sondern dauerhaft ein konstantes Verschraubungsmoment erhalten bleibt. Gleichwohl wird der Dichtungsring optimal und nicht über Gebühr komprimiert, sodass auch langfristig eine sichere Abdichtung gegen Schmutz und Feuchtigkeit erzielt ist. Alternativ zu der Befestigungsmutter, die auf das Gewinde des Bolzenelements geschraubt wird, ist es auch möglich, dass das Bolzenelement mit einer Stufe oder dergleichen, insbesondere mit einem Kopf, versehen ist, wobei sich die Stufe, insbesondere der Kopf, an dem Dachunterbauteil - gegebenenfalls unter Zwischenschaltung einer Stützscheibe oder dergleichen - abstützt. Ferner ist das Bolzenelement am Adapterbauteil befestigt, insbesondere mit diesem verschraubt. Dieses Verschrauben mit dem Adapterbauteil kann direkt oder indirekt erfolgen. Beim direkten Verschrauben greift das mit Gewinde versehene Bolzenelement in ein Gewindeloch des Adapterbauteils ein und beim indirekten Verschrauben ist ein Gewindeelement am Adapterbauteil vorgesehen, insbesondere daran befestigt, und das Gewinde des Bolzenelements ist in das Gewindeelement eingeschraubt. Die Erfindung sieht vor, dass der Dichtungsring oder der Dichtungsring zusammen mit dem Abstützelement in einer Vertiefung des Adapterbauteils angeordnet ist. Die Tiefe der Vertiefung ist ebenso groß wie die Abstützlänge des Abstützelements. Dies hat zur Folge, dass an die Vertiefung angrenzenden Bereiche des Adapterbauteils auf gleicher Höhe wie die auf das Dach des Fahrzeugs auflegbare Abstützfläche des Abstützelements liegt, sodass diese Bereiche und die Abstützfläche auf der Außenseite des Dachs des Fahrzeugs aufliegen.

Nach einer Weiterbildung der Erfindung ist vorgesehen, dass das Bolzenelement ein Stehbolzen, eine Gewindestange oder eine Gewindeschraube ist.

Nach einer Weiterbildung der Erfindung ist vorgesehen, dass das Abstützelement zwischen Bolzenelement und Dichtungsring angeordnet ist. Es liegt demzufolge in einem zwischen Bolzenelement und Dichtungsring liegenden Freiraum, d.h., der Dichtungsring liegt nicht eng am Umfang des Bolzenelements an, sondern hält einen Abstand ein, um dort den Freiraum zu schaffen. Zusätzlich oder alternativ ist es auch möglich, dass das Abstützelement auf einer Seite des Dichtungsrings liegt, die zu dem Bolzenelement abgewandt liegt. Ist nur diese Ausgestaltung vorhanden, so ist es nicht erforderlich, dass der Dichtungsring das Bolzenelement mit Abstand umgibt. Stets ist von Bedeutung, dass der Dichtungsring derart gestaltet ist, dass er die am Dach des Fahrzeugs vorgesehene Befestigungsöffnung derart umgibt, dass von außen her kein Schmutz und keine Feuchtigkeit eindringen können.

Das Abstützelement kann ein zusammenhängendes Bauteil sein oder es besteht aus mehreren Einzel-Abstützelementen, die verteilt angeordnet sind.

Eine Weiterbildung der Erfindung sieht vor, dass der Dichtungsring das Abstützelement, insbesondere das ringförmig ausgebildete Abstützelement, umgibt. Abstützelement und Dichtungsring überlappen sich daher axial nicht, sondern liegen radial nebeneinander.

Nach einer Weiterbildung der Erfindung ist vorgesehen, dass das Abstützelement am Bolzenelement befestigt oder einstückig mit dem Bolzenelement ausgebildet ist. Das Abstützelement bildet vorzugsweise am Bolzenelement eine Stufe, insbesondere eine Ringstufe aus, wobei ein derartiges Ringbauteil auf das Bolzenelement geschoben und dort befestigt sein kann oder dieses Bauteil ist einstückig am Bolzenelement ausgebildet. Insbesondere ist vorgesehen, dass das Abstützelement ein Flansch des Bolzenelements ist. Bevorzugt ist das Bolzenelement als Doppelbolzen ausgebildet, d.h., er weist zwei Bolzenabschnitte auf, mit einem dazwischen liegenden Flansch, wobei vorzugsweise die beiden Bolzenabschnitte und der Flansch einstückig miteinander ausgebildet sind. Insbesondere kann der Doppelbolzen zwei jeweils mit Gewinde versehene Bolzenabschnitte aufweisen, wobei zwischen den Bolzenabschnitten der Flansch liegt. Der eine mit Gewinde versehene Bolzenabschnitt gehört zur Befestigungsvorrichtung, sodass er der Befestigung der Dachreling, insbesondere der Dachleiste, dient, und der andere Bolzenabschnitt gehört der Befestigungseinrichtung an, mit der die Befestigung des Dachrelinghalters am Dach des Fahrzeugs vorgenommen wird.

Nach einer Weiterbildung der Erfindung kann auch vorgesehen sein, dass das Abstützelement ein auf das Bolzenelement aufgebrachtes Ringelement ist. Das Ringelement wird nach dem Aufbringen auf das Bolzenelement entweder mit diesem verbunden, beispielsweise durch Schweißung, oder es handelt sich bei dem Ringelement um ein mutterähnliches Ringelement, d.h., es weist ein Innengewinde auf und kann für das Aufbringen auf das Bolzenelement auf dieses aufgeschraubt werden. Alternativ kann vorgesehen sein, dass das Ringelement lose auf das Bolzenelement aufgeschoben wird, derart weit, dass es sich am Adapterbauteil abstützt.

Nach einer weiteren Ausführungsform der Erfindung ist vorgesehen, dass das Abstützelement am Adapterbauteil befestigt oder einstückig mit dem Adapterbauteil ausgebildet ist. Insofern handelt es sich bei dem Abstützelement nicht um ein Bauteil, das dem Bolzenelement angehört oder am Bolzenelement befestigt ist, sondern es ist in der Nähe des Bolzenelements am Adapterbauteil befestigt oder dort einstückig ausgebildet. Beispielsweise kann es durch eine Prägung am Adapterbauteil erzeugt werden (geprägtes Abstützelement).

Vorteilhaft ist es, wenn die Vertiefung eine Einprägung des Adapterbauteils ist. Hierdurch ist eine sehr einfache Fertigung möglich.

Eine Weiterbildung der Erfindung sieht vor, dass das Adapterbauteil eine Auflagefläche zur Anlage an das Dach des Fahrzeugs aufweist. Bei dieser Auflagefläche handelt es sich vorzugsweise um die vorstehend erwähnten Bereiche des Adapterbauteils.

Eine Weiterbildung der Erfindung sieht vor, dass das Bolzenelement mittels einer Schraubbefestigung am Adapterbauteil befestigt ist. Bevorzugt erfolgt dies mittels des bereits erwähnten, mit Gewinde versehenen Bolzenabschnitts des Bolzenelements. Bevorzugt kann die Schraubbefestigung am Adapterteil mittels einer am Adapterbauteil befestigten Einpressmutter erfolgen. Anstelle der Einpressmutter können auch andere Gewindeelemente verwendet werden, die am Adapterteil befestigt sind.

Eine Weiterbildung der Erfindung sieht vor, dass das Adapterbauteil ein Blechbauteil ist. Dies lässt sich sehr einfach herstellen. Insbesondere ist das Blechbauteil als C-Profil ausgebildet. Hierbei ist bevorzugt vorgesehen, dass die C-Profilierung des C-Profils durch Kanten des Blechbauteils erzeugt ist. Mithin kann durch Stanzen und Kanten das Blechbauteil aus einem Blech ausgestanzt und dann gekantet werden, um die C-Profilierung zu erstellen.

Insbesondere ist vorgesehen, dass die Befestigungsvorrichtung in Längsrichtung des C-Profils versetzt zur Befestigungseinrichtung liegt. Dies hat zur Folge, dass sowohl die Befestigungsvorrichtung als auch die Befestigungseinrichtung zugänglich sind, da sie sich nicht gegenseitig überdecken, wodurch die Befestigung am Dach des Fahrzeugs und auch die Befestigung der Dachreling erleichtert ist.

Eine Weiterbildung der Erfindung sieht vor, dass das C-Profil zwei Profilstege aufweist, und dass einer der Profilstege die Befestigungseinrichtung und der andere der Profilstege die Befestigungsvorrichtung aufweist, wobei der andere Profilsteg eine Ausnehmung zum Zugriff auf den im Innern des C-Profils gelegenen Bereich der Befestigungseinrichtung aufweist. Durch die Ausnehmung ist ein von außen erfolgender Zugriff auf die Befestigungseinrichtung möglich.

Die Erfindung betrifft ferner eine Dachrelinganordnung mit einem Dachrelinghalter, so wie er vorstehend erläutert wurde, sowie mit einer Dachreling, die mittels der Befestigungsvorrichtung am Adapterbauteil befestigt ist. Die Befestigungsvorrichtung weist bevorzugt mindestens eine Schraubbefestigung auf, mit der die Dachreling, insbesondere die Dachleiste, an dem Adapterbauteil befestigt ist.

Die Erfindung betrifft ferner ein Fahrzeug mit einer Dachrelinganordnung, so wie diese vorstehend erläutert wurde, wobei das mindestens ein Dachblech und ein Dachunterbauteil aufweisende Dach des Fahrzeugs eine Befestigungsöffnung aufweist, in die das Bolzenelement eingesteckt ist und mit einem am Bolzenelement angeordneten oder angebrachten Befestigungselement, das sich zum auf Block legen von Abstützelement, Dachblech, Dachunterbauteil und Befestigungselement sowie optional Adapterbauteil an der Unterseite des Dachunterbauteils abstützt. Durch das auf Block legen der verschiedenen Bauelemente ist eine sichere und auch auf Dauer mit gleichbleibender Haltekraft wirkende Befestigung des Dachrelinghalters am Dach des Fahrzeugs gewährleistet, ohne dass sich die Dichtungseigenschaften des Dichtrings im Laufe der Zeit verschlechtern. Bei dem vorstehend am Bolzenelement angeordneten oder angebrachten Befestigungselement kann es sich - in einem Ausführungsbeispiel der Erfindung - um eine Befestigungsmutter handeln, die auf das mit Gewinde versehene Bolzenelement aufgeschraubt ist oder um eine Stufe, insbesondere einen Kopf, des Bolzenelements, insbesondere dann, wenn das Bolzenelement als Gewindeschraube ausgebildet ist.

Schließlich ist es vorteilhaft, wenn zwischen der Unterseite des Dachunterbauteils und dem Befestigungselement mindestens eine Stützscheibe angeordnet ist. Die Stützscheibe dient einer großflächigen Krafteinleitung. Sie gehört zu den vorstehend erwähnten Bauteilen, die auf Block zueinander liegen.

Die Zeichnungen veranschaulichen die Erfindung anhand eines Ausführungsbeispiels und zwar zeigt:
- Figur 1: eine Seitenansicht auf eine als Dachleiste ausgebildete Dachreling mit mehreren Dachrelinghaltern,
- Figur 2: einen Dachrelinghalter in perspektivischer Ansicht,
- Figur 3: den Dachrelinghalter der Figur 2 in Explosionsdarstellung,
- Figuren 4 bis 6: ein Adapterbauteil des Dachrelinghalters in verschiedenen Ansichten,
- Figuren 7 und 8: den an der Dachreling befestigten Dachrelinghalter in Seitenansicht und perspektivischer Unteransicht,
- Figur 9: eine Schnittansicht durch eine an einem Dach eines Fahrzeugs befestigte Dachrelinganordnung mit dem Dachrelinghalter und der Dachreling,
- Figur 10: eine vergrößerte Darstellung eines in der Figur 9 mit Umrahmung gekennzeichneten Bereichs,
- Figur 11: ein weiteres Ausführungsbeispiel eines Dachrelinghalters im Bereich einer Befestigungseinrichtung in Schnittansicht und
- Figur 12: ein weiteres Ausführungsbeispiel eines Dachrelinghalters in einer der Figur 10 entsprechenden Darstellung.

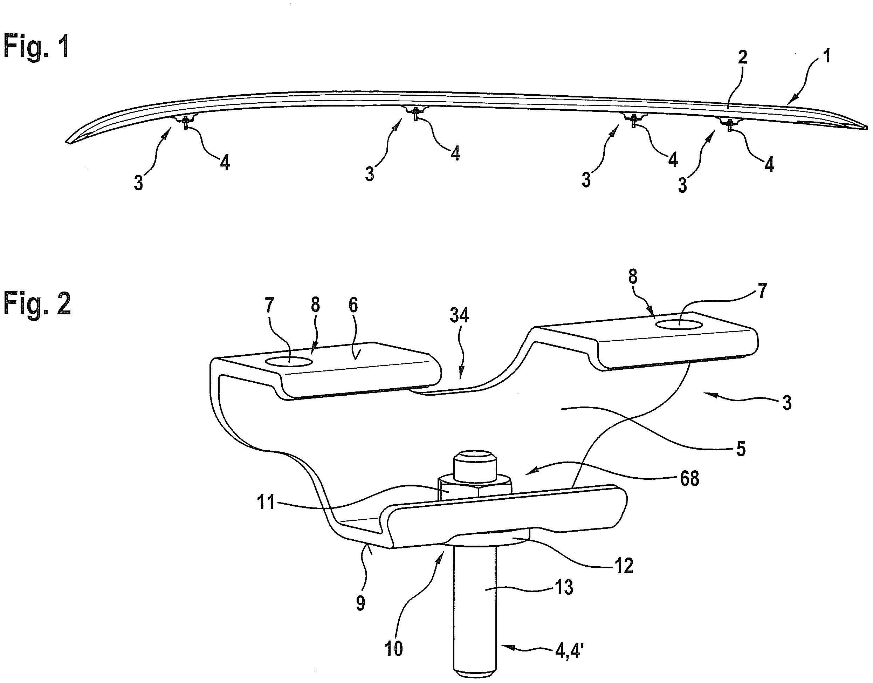

Die Figur 1 zeigt eine Dachreling 1, die als Dachleiste 2 ausgebildet ist und auf dem Dach eines nicht dargestellten Fahrzeugs befestigt wird. Die Dachreling 1 wird mittels mehrerer Dachrelinghalter 3 am Dach des Fahrzeugs befestigt. In der Figur 1 sind vier Dachrelinghalter 3 dargestellt, die über die Länge der Dachreling 1 verteilt an dieser befestigt sind. Für die Befestigung der Dachreling 1 ist es lediglich erforderlich, diese insbesondere mit den daran befestigten Dachrelinghaltern 3 dem Dach des Fahrzeugs derart zuzuführen, dass Bolzenelemente 4, die insbesondere als Stehbolzen 4' ausgebildet sein können, des Dachrelinghalters 3 in Befestigungsöffnungen des Dach des Fahrzeugs eintauchen, sodass von der Innenseite des Dachs aus Befestigungselemente an den Bolzenelementen angebracht werden können, wodurch die Dachreling 1 sicher und fest am Dach des Fahrzeugs gehalten ist. Vorzugsweise besitzt ein Fahrzeug zwei, parallel zueinander verlaufende Dachrelings 1 auf dem Dach. Alternativ kann - bei einer anderen Ausführungsform des Dachrelinghalters - die Befestigung am Dach des Fahrzeugs derart erfolgen, dass die Dachreling mit den daran befestigten Dachrelinghaltern dem Dach des Fahrzeugs von außen her zugeführt wird und dass vom Innern des Dachs Bolzenelemente durch die Befestigungsöffnungen des Dachs geschoben und mit den Dachrelinghaltern 3 direkt oder indirekt verschraubt werden.

Die Figur 2 zeigt einen Dachrelinghalter 3 in perspektivischer Darstellung. Der Dachrelinghalter 3 weist ein Adapterbauteil 5 auf, das an seiner Oberseite 6 Befestigungslöcher 7 einer Befestigungsvorrichtung 8 aufweist. Die Befestigungsvorrichtung 8 dient dazu, das Adapterbauteil 5 an der Dachreling 1 zu befestigen. An seiner Unterseite 9 weist das Adapterbauteil 5 eine Befestigungseinrichtung 10 auf, der der Stehbolzen 4' angehört. Die Befestigungseinrichtung 10 dient dazu, den Dachrelinghalter 3 am Dach des Fahrzeugs zu befestigen. Die Befestigungseinrichtung 10 ist vorzugsweise als Schraubbefestigung (68) ausgebildet und weist ferner eine am Adapterbauteil 5 festgelegte Einpressmutter 11 auf. Dem Stehbolzen 4' ist ein komprimierbarer Dichtungsring 12 zugeordnet. Der Dichtungsring 12 umgibt den Stehbolzen 4' und liegt an der Unterseite 9 des Adapterbauteils 5 an.

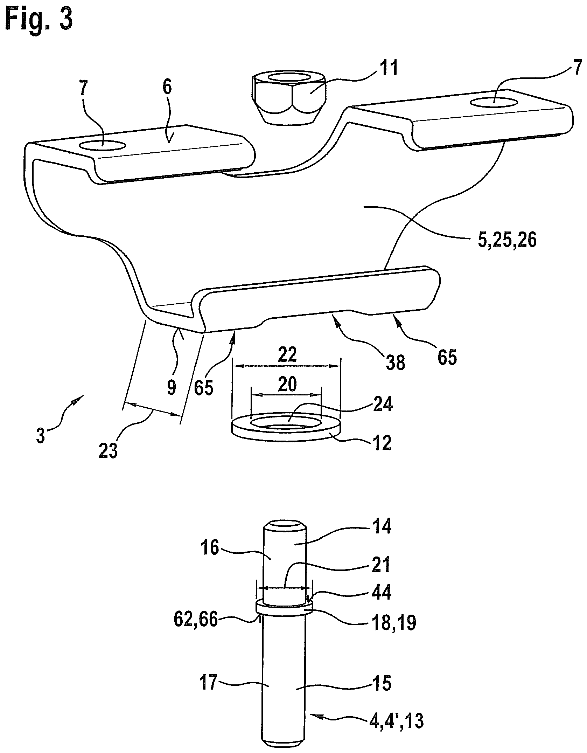

Die Figur 3 verdeutlicht den Aufbau des Dachrelinghalters 3 in Explosionsdarstellung. Es ist erkennbar, dass der Stehbolzen 4' als Doppelbolzen 13 ausgebildet ist, der zwei Bolzenabschnitte 14 und 15 aufweist. Die beiden Bolzenabschnitte 14 und 15 sind mit Gewinde 16, 17 versehen. Zwischen den beiden Bolzenabschnitten 14 und 15 befindet sich ein Abstützelement 18, das einen Flansch 19 des Doppelbolzens 13, also des Stehbolzens 4' bildet. Der Stehbolzen 4' ist einstückig ausgebildet, d.h., die beiden mit Gewinde 16 und 17 versehenen Bolzenabschnitte 14 und 15 sowie der Flansch 19 sind miteinander einstückig gestaltet. Der Dichtungsring 12, der vorzugsweise aus Moosgummi besteht, weist einen Innendurchmesser 20 auf, der größer ist, als der Durchmesser 21 des ringförmig ausgebildeten Flansches 19. Der Außendurchmesser 22 des Dichtungsrings 12 ist etwa so groß, wie die Tiefe 23 des Adapterbauteils 5 im Bereich seiner Unterseite 9. Vorzugsweise sind der Flansch 19 und der Dichtungsring 12 - im Grundriss gesehen - kreisförmig gestaltet. Dementsprechend definiert der Innendurchmesser 20 eine Ringöffnung 24 des Dichtungsrings 12, die ebenfalls im Grundriss kreisförmig gestaltet.

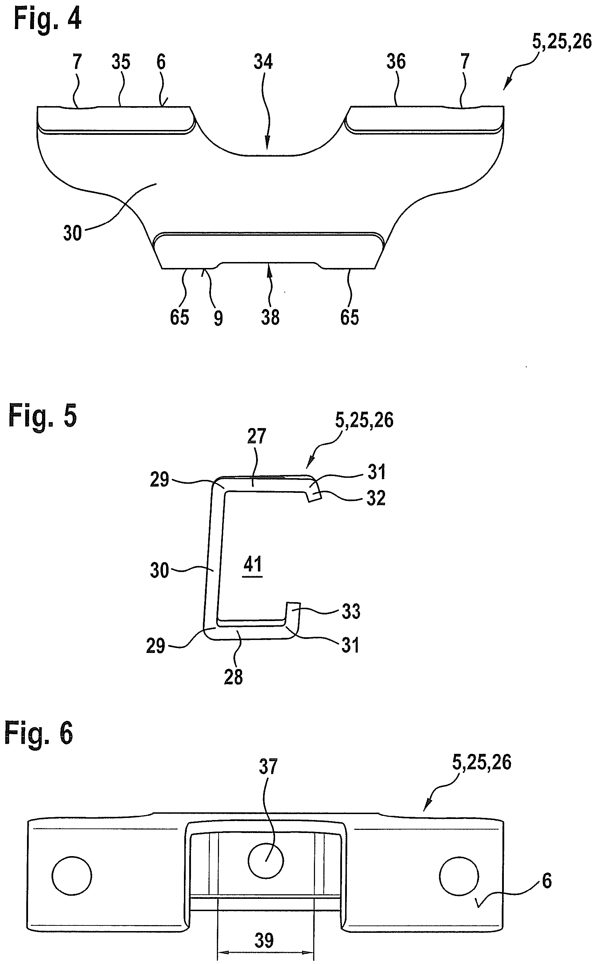

Die Figuren 4 bis 6 zeigen den Aufbau des Adapterbauteils 5. Die Figur 4 zeigt eine Seitenansicht, die Figur 5 eine Stirnansicht und die Figur 6 eine Draufsicht auf die Oberseite 6 des Adapterbauteils 5. Das Adapterbauteil 5 ist einstückig aus Blech hergestellt, d.h., es ist ein Blechbauteil 25. Gemäß der Stirnansicht der Figur 5 ist es mit einer C-Profilierung versehen, sodass es als C-Profil 26 ausgebildet ist. Das C-Profil 26 weist zwei Profilstege 27 und 28 auf, die über 90° Kantungen 29 in einen Rückensteg 30 übergehen. Ferner gehen über Kantungen 31 die Profilstege 27 und 28 in kurze Vorderstege 32 und 33 über. Die Kantungen 31 weisen ebenfalls Kantungswinkel im Bereich von 90° oder - wie aus der Figur 5 ersichtlich - weniger als 90° auf. Die Vorderstege 32 und 33 wirken als Versteifungsstege des Blechbauteils 25.

Gemäß Figur 4 befindet sich im Bereich der Oberseite 6 des Adapterbauteils 5 eine Ausnehmung 34, die den Profilsteg 27 sowie den Vordersteg 32 unterbricht und ein Stück weit in den Rückensteg 30 hineinragt. Hierdurch wird der Profilsteg 27 in zwei Profilstegabschnitte 35 und 36 unterteilt, wobei sich zwischen den beiden Profilstegabschnitten 35 und 36 die Ausnehmung 34 befindet. Die Länge der beiden Profilstegabschnitte 35 und 36 zusammen mit der Länge der Ausnehmung 34 ist größer als die Länge des Profilstegs 28. Vorzugsweise weist der Profilsteg 28 eine Länge auf, die größer ist, als die Länge der Ausnehmung 34 (Figur 4). Eines der Befestigungslöcher 7 befindet sich im Profilstegabschnitt 35 und das andere der Befestigungslöcher 7 im Profilstegabschnitt 36. Der Profilsteg 28 ist mit einem Befestigungsloch 37 versehen, das der Befestigungseinrichtung 10 angehört. Ferner weist der Profilsteg 28 im Bereich seiner Unterseite 9 eine Vertiefung 38 auf, die sich über die gesamte Tiefe 23 des Profilstegs 28 erstreckt und in der - vorzugsweise etwa mittig - das Befestigungsloch 37 liegt. Gemäß Figur 6 ist die Länge 39 der Vertiefung 38 kleiner, vorzugsweise etwas kleiner, als die Länge der Ausnehmung 34. Die Vertiefung 38 besitzt etwa einen quadratischen Grundriss. Sie wird vorzugsweise durch einen Prägevorgang der Blechwand des Blechbauteils 25, also des Adapterbauteils 5, gebildet.

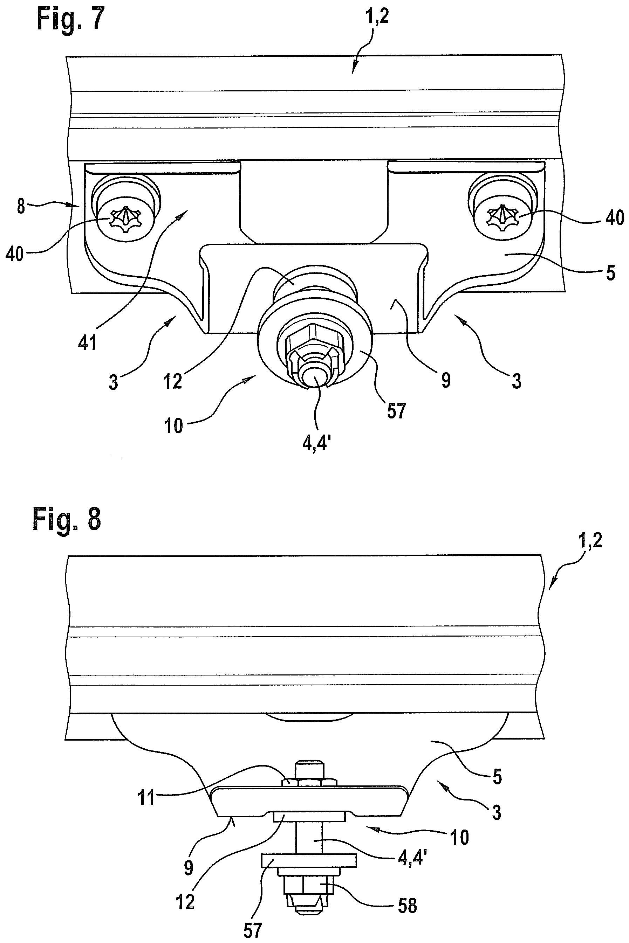

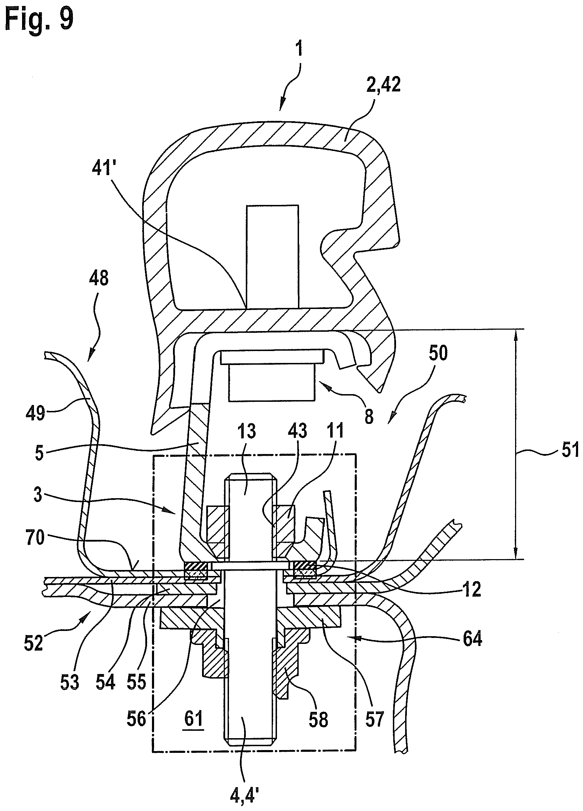

Gemäß der Figuren 7 bis 9 wird der Dachrelinghalter 3 mittels zweier Gewindeschrauben 40 mit der Dachreling 1, insbesondere der Dachleiste 2, verbunden. Hierzu wird die jeweilige Gewindeschraube 40 vom Innern des C-Profils 26 aus durch das entsprechende Befestigungsloch 7 gesteckt und in ein Gewindeloch 41' (Figur 9) an der Unterseite der Dachreling 1, insbesondere der Dachleiste 2, eingeschraubt. Anstelle von Gewindeschrauben 40 können auch andere Befestigungsmittel, wie beispielsweise Niete oder dergleichen zum Einsatz gelangen. Wie aus der Figur 9 ersichtlich, ist die Dachleiste 2 vorzugsweise als Hohlprofil 42 ausgebildet, sodass der eingeschraubte Gewindeschaft der Gewindeschraube 40 beziehungsweise ein entsprechender Bereich eines Niets oder dergleichen im Innern des Hohlprofils 42 aufgenommen werden kann. Bei dem Niet handelt es sich vorzugsweise um einen Blindniet.

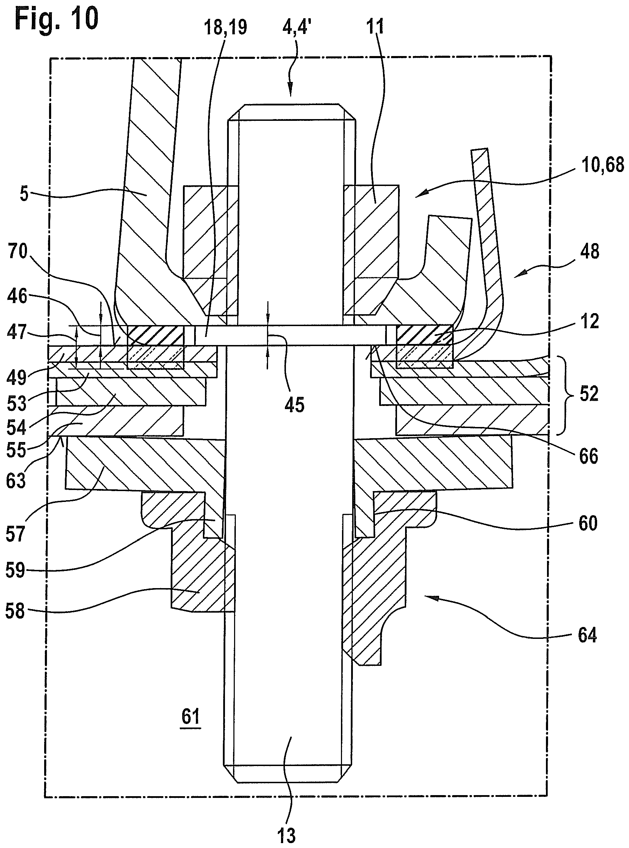

Gemäß der Figuren 8 und 9 ist die Einpressmutter 11 derart vom Innern 41 des C-Profils 26 an dem Profilsteg 28 befestigt, dass ihr Innengewinde 43 mit dem Befestigungsloch 37 fluchtet. Die Einpressmutter 11 ist fest mit dem Adapterbauteil 5 durch einen Einpressvorgang verbunden. Von der Unterseite 9 des Adapterbauteils 5 her ist der Stehbolzen 4' mit seinem mit Gewinde 16 versehenen Bolzenabschnitt 14 in das Innengewinde 43 der Einpressmutter 11 eingeschraubt, d.h., der Bolzenabschnitt 14 durchsetzt das Befestigungsloch 37 und greift dann in das Innengewinde 43 ein. Das Einschrauben ist derart erfolgt, dass sich der Flansch 19 mit seiner Oberseite 44 fest an die Unterseite 9 im Bereich der Vertiefung 38 anlegt. Der Flansch 19 bildet das Abstützelement 18, d.h., dieses liegt auf Block mit dem Profilsteg 28 und damit auf Block mit dem Adapterbauteil 5. Gemäß Figur 10 ist die Abstützlänge 45, die der Dicke des Flansches 19 entspricht, ebenso groß wie die Tiefe 46 der Vertiefung 38. Ferner ist der Figur 10 zu entnehmen, dass das Abstützelement 18 von dem Dichtungsring 12 umgeben ist, wobei der Dichtungsring 12 in der Figur 10 sowohl komprimiert als auch unkomprimiert dargestellt ist. Der komprimierte Zustand ist nicht gestrichelt gezeigt, während der nichtkomprimierte Zustand sich aus dem nichtgestrichelten und einem gestrichelten Bereich zusammensetzt. Im nichtkomprimierten Zustand weist der Dichtungsring eine Dicke 47 auf, die größer ist, als die Abstützlänge 45 des Abstützelements 18.

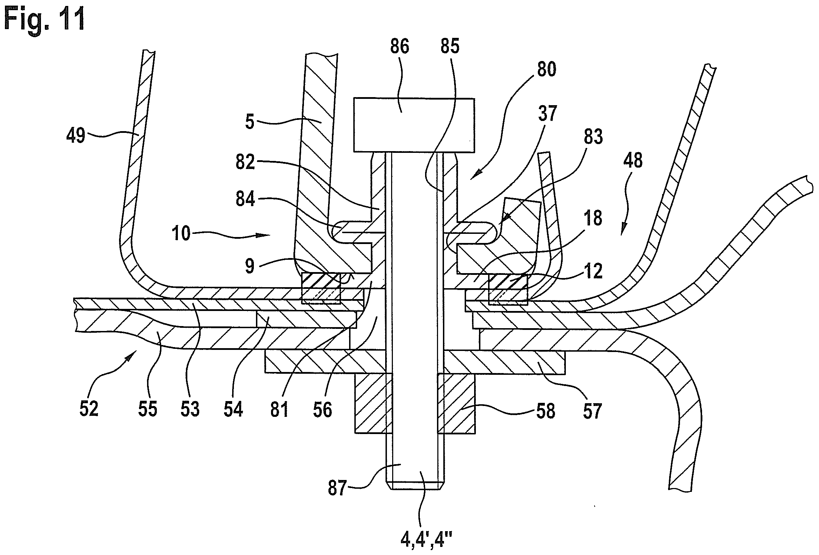

Die Figuren 10 und 11 zeigen die mittels des Dachrelinghalters 3 auf einem Dach 48 eines Fahrzeugs befestigte Dachreling 1. Das Dach 48 weist ein außen liegendes Dachblech 49 auf, das mit einem Bereich einen Dachkanal 50 bildet, in dem die Dachrelinghalter 3 (Figur 1) befestigt sind, die wiederum die Dachreling 1 tragen. Die Höhe 51 der Dachrelinghalter 3 entspricht etwa der Tiefe des Dachkanals 50. Ferner weist das Dach 48 des Fahrzeugs ein Dachunterbauteil 52 auf, das sich aus mehreren Blechen, Streben oder dergleichen 53, 54 und 55 zusammensetzt, wobei das Dachblech 49 und das Dachunterbauteil 52 auf Block zueinander liegen und sich eine Befestigungsöffnung 56 durch das gesamte Dach 48 des Fahrzeugs erstreckt. Dies bedeutet, dass die Befestigungsöffnung 56 gebildet ist von entsprechenden Öffnungen des Dachblechs 49 und der Bleche, Streben oder dergleichen 53, 54 und 55. Hierbei ist es möglich, dass die Durchmesser der verschiedenen Öffnungen unterschiedlich groß sind, um Toleranzen ausgleichen zu können. Wie erwähnt, liegen das Dachblech 49 und die Bleche, Streben oder dergleichen 53, 54 und 55 auf Block zueinander oder werden auf Block aufeinander gespannt, wenn der Dachrelinghalter 3 montiert wird.

Den Figuren 7 bis 10 ist zu entnehmen, dass auf den Bolzenabschnitt 15 des Stehbolzens 4' eine Stützscheibe 57 aufgesteckt ist, die von einer Befestigungsmutter 58 beaufschlagt wird. Die ein Befestigungselement 69 darstellende Befestigungsmutter 58 ist vorzugsweise als selbstsichernde Befestigungsmutter ausgebildet. Gemäß Figur 10 kann vorgesehen sein, dass die Stützscheibe 57 nicht scheibenförmig ausgebildet, sondern mit einem Ringsteg 59 versehen ist, der in eine Ringausnehmung 60 der Befestigungsmutter 58 axial eingreift. Die Ausbildung mit dem Ringsteg 59 und der Ringausnehmung 60 ist jedoch optional.

Bei der Befestigung des Dachrelinghalters 3 auf dem Dach 48 des Fahrzeugs wird wie folgt vorgegangen. Nachstehend wird nur die Montage anhand eines der Dachrelinghalter 3 erläutert, da entsprechend bei den anderen Dachrelinghaltern 3 (Figur 1) vorgegangen wird. Der mit der Dachreling 1 verschraubte Dachrelinghalter 3 wird mit seinem Stehbolzen 4' in die Befestigungsöffnung 56 des Dachs 48 eingesteckt. Der Stehbolzen 4' ist zuvor - wie erläutert - in die Einpressmutter 11 eingeschraubt, sodass sich sein Abstützelement 18 auf Block zum Adapterbauteil 5 befindet. Ferner wird das Abstützelement 18 von dem Dichtungsring 12 umgeben, der beispielsweise mittels einer Selbstklebebeschichtung an der Unterseite 9 des Adapterbauteils 5 gehalten ist. Er kann jedoch auch lose verbaut werden, was jedoch die Handhabung erschwert oder auf andere Art und Weise vorfixiert sein. Durch das Einstecken des Stehbolzens 4' in die Befestigungsöffnung 56 des Dachs 48 des Fahrzeugs ragt der Bolzenabschnitt 15 nach unten aus der Befestigungsöffnung 56 heraus, also in das Dachinnere 61 hinein. Von dort aus wird die Stützscheibe 57 auf dem Bolzenabschnitt 15 gesteckt und anschließend die Befestigungsmutter 58 auf das Gewinde 17 des Bolzenabschnitts 15 geschraubt. Beim Festziehen der Befestigungsmutter 58 legt sich die Unterseite 62 des Abstützelements 18 (Figur 3), die eine Abstützfläche 66 (Figur 10) bildet, auf Block zur Außenseite 70 des Dachblechs 49. Ferner wird der Dichtungsring 12 von seiner ursprünglichen Dicke 47 auf die Abstützlänge 45 beziehungsweise die Tiefe 46 der Vertiefung 38 komprimiert, sodass er mit einer Seite dichtend an dem Adapterbauteil 5 und mit seiner anderen Seite dichtend an der Außenseite 70 des Dachs 48 des Fahrzeugs anliegt und dabei die Befestigungsöffnung 56 dichtend umgibt, sodass von außen her in die Befestigungsöffnung 56 und somit in das Innere des Dachs 48 kein Schmutz und keine Feuchtigkeit und so weiter eindringen können. Ferner wird durch das Aufschrauben der Befestigungsmutter 58 die Stützscheibe 57 auf Block zur Unterseite 63 (Figur 10) des Dachunterbauteils 52, nämlich des unteren Blechs, der unteren Strebe oder dergleichen 55 gedrängt, wobei auch die Befestigungsmutter 58 auf Block zu der Stützscheibe 57 gelangt. Die Befestigungsmutter 58 kann mit einem definierten Drehmoment angezogen werden, wobei dieses Drehmoment aufgrund der so gebildeten Blockverschraubung 64 stets erhalten bleibt, da keine Nachgiebigkeit besteht. Die Blockverschraubung 64 ist durch das auf Block liegen von Adapterbauteil 5, Abstützelement 18, Dachblech 49 sowie Dachunterbauteil 52, Stützscheibe 57 und Befestigungsmutter 58 erzielt. Gleichwohl wird der Dichtungsring 12 nur auf ein vorgegebenes Maß komprimiert, das sich aus der Abstützlänge 45 des Abstützelements 18 ergibt. Auf der Außenseite 70 des Dachblechs 49 liegen sowohl die Unterseite 62 des Abstützelements 18, als auch die Bereiche 65 (Figur 3) der Unterseite 9 des Profilstegs 28 auf, da die Abstützlänge 45 des Abstützelements 18 ebenso groß ausgebildet ist wie die Tiefe 46 der Vertiefung 38. Insofern bilden die Bereiche 65 eine Auflagefläche 67 zur Anlage an das Dach 48 des Fahrzeugs.

Aus alledem ergibt sich, dass aufgrund der Erfindung eine sichere und stabile Festlegung der Dachreling 1 auf dem Dach 48 des Fahrzeugs mittels des Dachrelinghalters 3 beziehungsweise mehrerer Dachrelinghalter 3 erfolgt, wobei gleichzeitig eine Abdichtung mittels des Dichtungsrings 12 geschaffen ist, sodass in das Innere des Dachs 48 nichts von außen eindringen kann.

Die Figur 11 zeigt ein weiteres Ausführungsbeispiel eines Dachrelinghalters 3 im Bereich der Befestigungseinrichtung 10. Dargestellt ist ferner das Dach 48 des nicht weiter gezeigten Fahrzeugs mit Dachblech 49 und Dachunterbauteil 52 mit Blechen 53, 54 und 55. Es gelten alle zum Ausführungsbeispiel der Figur 1 bis 10 gezeigten und beschriebenen Ausgestaltungen bis auf die nachstehenden Unterschiede. Die Unterschiede betreffen die Schraubbefestigung 68 sowie das Bolzenelement 4. Anstelle der Schraubbefestigung 68 und des Doppelbolzens 13 gemäß der Ausführungsform der Figuren 1 bis 10 ist bei dem Ausführungsbeispiel der Figur 11 ein Blindniet 80, auch Distanzniet genannt, vorgesehen, der am Befestigungsloch 37 des Adapterbauteils 5 vernietet wird. Der Blindniet 80 weist einen Kopf 81, einen Schaft 82 und eine Verformungszone 83 auf, die am Schaft 82 ausgebildet ist. Der Blindniet 80 wird in das Befestigungsloch 37 eingesteckt, sodass sich der Kopf 81 an der Unterseite 9 des Adapterbauteils 5 abstützt. Der Kopf 81 bildet das Abstützelement 18. Anschließend wird mit einem entsprechenden Werkzeug die Verformungszone 83 des Blindniets 80 derart verformt (so wie aus der Figur 11 ersichtlich), dass sich ein Flansch 84 bildet. Mithin ist das Adapterbauteil 5 zwischen Kopf 81 und Flansch 84 eingespannt. Der Blindniet 80 wird von einem Durchgangskanal 85 durchsetzt, in den von der Seite der Dachreling aus ein Bolzenelement 4 eingesteckt wird, das vorzugsweise als Gewindeschraube 4" ausgebildet ist. Es ist auch denkbar, dass mittels des Bolzenelements 4 beziehungsweise der Gewindeschraube 4" der Blindniet 80 - wie vorstehend beschrieben - verformt wird. Die in den Blindniet 80 eingeschraubte Gewindeschraube 4" bildet quasi einen Stehbolzen 4'. Die Befestigung des Dachrelinghalters 3 am Dach 48 des Fahrzeugs erfolgt in entsprechender Weise, so wie bei dem Ausführungsbeispiel der Figuren 9 und 10 beschrieben. Die Gewindeschraube 4" stützt sich mit ihrem Kopf 86 am Blindniet 80 ab und auf den Gewindeschaft 87 der Gewindeschraube 4" wird eine Befestigungsmutter 58 geschraubt, die im Ausführungsbeispiel der Figur 11 nicht als selbstsichernde Mutter dargestellt ist, jedoch alternativ auch selbstsichernd sein kann.

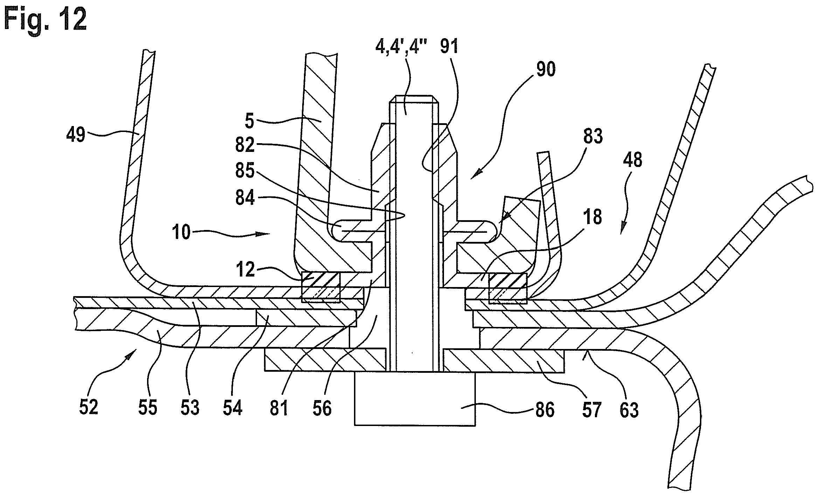

Das Ausführungsbeispiel der Figur 12 entspricht im Wesentlichen dem Ausführungsbeispiel der Figur 11, sodass auf dieses Ausführungsbeispiel verwiesen wird, in Verbindung mit dem Ausführungsbeispiel der Figuren 1 bis 10. Unterschiedlich ist jedoch die Ausbildung der Befestigungseinrichtung 10 und die Verwendung des vorzugsweise ebenfalls als Gewindeschraube 4" ausgebildeten Bolzenelements 4. Anstelle des Blindniets 80 gemäß Figur 11 wird beim Ausführungsbeispiel der Figur 12 eine Blindnietmutter 90, auch Nietmutter genannt, verwendet. Diese unterscheidet sich vom Blindniet 80 lediglich dadurch, dass der Durchgangskanal 85 mit einem Innengewinde 91 versehen ist. bei der Befestigung am Dach 48 des nicht weiter dargestellten Fahrzeugs wird - im Unterschied zu den Ausführungsbeispielen der Figuren 1 bis 11 - das Bolzenelement 4 nicht von außen in die Befestigungsöffnung 56 des Dachs 48 eingesteckt, sondern vom Innern des Dachs 48 aus, sodass sich der Kopf 86 der Gewindeschraube 4" an der Unterseite vom Dachunterbauteil 52, vorzugsweise unter Zwischenschaltung der Stützscheibe 57, abstützt, die Befestigungsöffnung 56 sowie das Befestigungsloch 37 durchsetzt und in das Innengewinde 91 der Blindnietmutter 90 eingeschraubt wird.

## Patentansprüche

1. Dachrelinghalter (3) mit einem Adapterbauteil (5), das eine Befestigungseinrichtung (10) zur Montage an einem Dach eines Fahrzeugs und eine Befestigungsvorrichtung (8) zur Montage einer Dachreling des Fahrzeugs aufweist, wobei die Befestigungseinrichtung (10) ein vorzugsweise mit Gewinde (16,17) versehenes Bolzenelement (4) aufweist, das von einem komprimierbaren Dichtungsring (12) umgeben ist, dem Bolzenelement (4) mindestens ein Abstützelement (18) zugeordnet ist, das einerseits an dem Adapterbauteil (5) anliegt oder mit dem Adapterbauteil (5) verbunden ist und andererseits mindestens eine auf das Dach (48) des Fahrzeugs auflegbare Abstützfläche (66) aufweist, wobei - in Axialrichtung des Bolzenelements (4) gesehen - die Dicke (47) des unkomprimierten Dichtungsrings (12) größer als die Abstützlänge (45) des Abstützelements (18) ist, die Abstützlänge (45) der Dicke des Abstützelements (18) entspricht, der Dichtungsring (12) oder der Dichtungsring (12) zusammen mit dem Abstützelement (18) in einer Vertiefung (38) des Adapterbauteils (5) angeordnet ist, und wobei die Tiefe (46) der Vertiefung (38) ebenso groß wie die Abstützlänge (45) des Abstützelements (18) ist.

2. Dachrelinghalter nach Anspruch 1, **dadurch gekennzeichnet, dass** das Bolzenelement (4) ein Stehbolzen (4'), eine Gewindestange oder eine Gewindeschraube (4") ist.

3. Dachrelinghalter nach einem der vorhergehenden Ansprüche, **dadurch gekennzeichne**t, dass das Abstützelement (18) zwischen Bolzenelement (4) und Dichtungsring (12) angeordnet ist.

4. Dachrelinghalter nach einem der vorhergehenden Ansprüche, **dadurch gekennzeichnet, dass** das Abstützelement (18) ringförmig das Bolzenelement (4) umgibt.

5. Dachrelinghalter nach einem der vorhergehenden Ansprüche, **dadurch gekennzeichnet, dass** der Dichtungsring (12) das Abstützelement (18), insbesondere das ringförmig ausgebildete Abstützelement (18), umgibt.

6. Dachrelinghalter nach einem der vorhergehenden Ansprüche, **dadurch gekennzeichnet, dass** das Abstützelement (18) am Bolzenelement (4) befestigt oder einstückig mit dem Bolzenelement (4) ausgebildet ist.

7. Dachrelinghalter nach einem der vorhergehenden Ansprüche, **dadurch gekennzeichne**t, dass das Abstützelement (18) ein Flansch (19) des Bolzenelements (4) ist.

8. Dachrelinghalter nach einem der vorhergehenden Ansprüche, **dadurch gekennzeichnet, dass** das Bolzenelement (4) als Doppelbolzen (13) ausgebildet ist.

9. Dachrelinghalter nach einem der vorhergehenden Ansprüche, **dadurch gekennzeichnet, dass** der Doppelbolzen (13) zwei jeweils mit Gewinde (16,17) versehene Bolzenabschnitte (14,15) aufweist, wobei zwischen den Bolzenabschnitten (14,15) der Flansch (19) liegt.

10. Dachrelinghalter nach einem der vorhergehenden Ansprüche, **dadurch gekennzeichnet, dass** das Abstützelement (18) ein auf das Bolzenelement (4) aufgebrachtes Ringelement ist.

11. Dachrelinghalter nach einem der vorhergehenden Ansprüche, **dadurch gekennzeichnet, dass** das Abstützelement (18) am Adapterbauteil (5) befestigt oder einstückig mit dem Adapterbauteil (5) ausgebildet ist.

12. Dachrelinghalter nach einem der vorhergehenden Ansprüche, **dadurch gekennzeichnet, dass** die Vertiefung (38) eine Einprägung des Adapterbauteils (5) ist.

13. Dachrelinghalter nach einem der vorhergehenden Ansprüche, **dadurch gekennzeichne**t, dass das Adapterbauteil (5) eine Auflagefläche (67) zur Anlage an das Dach (48) des Fahrzeugs aufweist.

14. Dachrelinghalter nach einem der vorhergehenden Ansprüche, **dadurch gekennzeichnet, dass** das Bolzenelement (4) mittels einer Schraubbefestigung (68) am Adapterbauteil befestigt ist.

15. Dachrelinghalter nach einem der vorhergehenden Ansprüche, **dadurch gekennzeichnet, dass** die Schraubbefestigung (68) eine am Adapterbauteil (5) befestigte Einpressmutter (11), ein am Adapterbauteil (5) befestigter Niet, insbesondere Blindniet (80), oder eine am Adapterbauteil (5) befestigte Nietmutter, insbesondere Blindnietmutter (90), ist.

16. Dachrelinghalter nach einem der vorhergehenden Ansprüche, **dadurch gekennzeichnet, dass** das Adapterbauteil (5) ein Blechbauteil (25) ist.

17. Dachrelinghalter nach einem der vorhergehenden Ansprüche, **dadurch gekennzeichnet, dass** das Blechbauteil (25) ein C-Profil (26) ist.

18. Dachrelinghalter nach einem der vorhergehenden Ansprüche, **dadurch gekennzeichnet, dass** die C-Profilierung des C-Profils (26) durch Kanten des Blechbauteils (25) erzeugt ist.

19. Dachrelinghalter nach einem der vorhergehenden Ansprüche, **dadurch gekennzeichnet, dass** die Befestigungsvorrichtung (8) in Längsrichtung des C-Profils (26) versetzt zur Befestigungseinrichtung (10) liegt.

20. Dachrelinghalter nach einem der vorhergehenden Ansprüche, **dadurch gekennzeichnet, dass** das C-Profil (26) zwei Profilstege (27,28) aufweist, und dass einer der Profilstege (28) die Befestigungseinrichtung (10) und der andere der Profilstege (27) die Befestigungsvorrichtung (8) aufweist, wobei der andere Profilsteg (27) eine Ausnehmung (34) zum Zugriff auf den im Innern (41) des C-Profils (26) gelegenen Bereich der Befestigungseinrichtung (10) aufweist.

21. Dachrelinganordnung mit einem Dachrelinghalter (3) nach einem oder mehreren der vorhergehenden Ansprüche sowie mit einer Dachreling (1), die mittels der Befestigungsvorrichtung (8) am Adapterbauteil (5) befestigt ist.

22. Fahrzeug mit einer Dachrelinganordnung nach einem oder mehreren der vorhergehenden Ansprüche, wobei das mindestens ein Dachblech (49) und ein Dachunterbauteil (52) aufweisende Dach (48) des Fahrzeugs eine Befestigungsöffnung (56) aufweist, in die das Bolzenelement (4) eingesteckt ist und mit einem am Bolzenelement (4) angeordneten oder angebrachten Befestigungselement (69), das sich zum auf Block legen von Abstützelement (18), Dachblech (49), Dachunterbauteil (52) und Befestigungselement (69) sowie optional Adapterbauteil (5) an der Unterseite (63) des Dachunterbauteils (52) abstützt.

23. Fahrzeug nach einem der vorhergehenden Ansprüche, **dadurch gekennzeichnet, dass** zwischen der Unterseite (63) des Dachunterbauteils (52) und dem Befestigungselement (69) mindestens eine Stützscheibe (57) angeordnet ist.

## Claims

1. Roof rail retainer (3) with an adapter component (5), which has a fastening apparatus (10) for mounting on a roof of a vehicle and a fastening device (8) for mounting a roof rail of the vehicle, wherein the fastening apparatus (10) has a bolt element (4) which is preferably provided with a thread (16, 17) and which is surrounded by a compressible sealing ring (12), wherein at least one supporting element (18) is associated with the bolt element (4), wherein the supporting element (18) on the one hand lies in contact with the adapter component (5) or is connected to the adapter component (5), and on the other hand has at least one supporting surface (66) which can be placed onto the roof (48) of the vehicle, wherein - as viewed in the axial direction of the bolt element (4) - the thickness (47) of the uncompressed sealing ring (12) is greater than the supporting length (45) of the supporting element (18), the supporting length (45) corresponds to the thickness of the supporting element (18), the sealing ring (12) or the sealing ring (12) together with the supporting element (18) is disposed in a recess (38) in the adapter component (5), and wherein the depth (46) of the recess (38) is just as great as the supporting length (45) of the supporting element (18).

2. Roof rail retainer according to claim 1, **characterized in that** the bolt element (4) is a stud bolt (4'), a threaded rod or a threaded screw (4").

3. Roof rail retainer according to one of the preceding claims, **characterized in that** the supporting element (18) is disposed between the bolt element (4) and the sealing ring (12).

4. Roof rail retainer according to one of the preceding claims, **characterized in that** the supporting element (18) surrounds the bolt element (4) in an annular manner.

5. Roof rail retainer according to one of the preceding claims, **characterized in that** the sealing ring (12) surrounds the supporting element (18), in particular the annular supporting element (18).

6. Roof rail retainer according to one of the preceding claims, **characterized in that** the supporting element (18) is fastened on the bolt element (4) or is formed integrally with the bolt element (4).

7. Roof rail retainer according to one of the preceding claims, **characterized in that** the supporting element (18) is a flange (19) of the bolt element (4).

8. Roof rail retainer according to one of the preceding claims, **characterized in that** the bolt element (4) is designed as a double bolt (13).

9. Roof rail retainer according to one of the preceding claims, **characterized in that** the double bolt (13) has two bolt sections (14, 15) each provided with a thread (16, 17), wherein the flange (19) is located between the bolt sections (14, 15).

10. Roof rail retainer according to one of the preceding claims, **characterized in that** the supporting element (18) is a ring element attached to the bolt element (4).

11. Roof rail retainer according to one of the preceding claims, **characterized in that** the supporting element (18) is fastened on the adapter component (5) or is formed integrally with the adapter component (5).

12. Roof rail retainer according to one of the preceding claims, **characterized in that** the recess (38) is an impression in the adapter component (5).

13. Roof rail retainer according to one of the preceding claims, **characterized in that** the adapter component (5) has a contact surface (67) for bearing on the roof (48) of the vehicle.

14. Roof rail retainer according to one of the preceding claims, **characterized in that** the bolt element (4) is fastened on the adapter component by means of a screw fastening (68).

15. Roof rail retainer according to one of the preceding claims, **characterized in that** the screw fastening (68) is an insert nut (11) fastened to the adapter component (5), a rivet, in particular a blind rivet (80), fastened to the adapter component (5) or a rivet nut, in particular a blind rivet nut (90) fastened to the adapter component (5).

16. Roof rail retainer according to one of the preceding claims, **characterized in that** the adapter component (5) is a sheet metal component (25).

17. Roof rail roof rail retainer according to one of the preceding claims, **characterized in that** the sheet metal component (25) is a C-profile (26).

18. Roof rail roof rail retainer according to one of the preceding claims, **characterized in that** the C-profiling of the C-profile (26) is produced by edging of the sheet metal component (25).

19. Roof rail retainer according to one of the preceding claims, **characterized in that** the fastening device (8) is offset with respect to the fastening apparatus (10) in the longitudinal direction of the C-profile (26).

20. Roof rail retainer according to one of the preceding claims, **characterized in that** the C-profile (26) has two profile bars (27, 28), and that one of the profile bars (28) has the fastening apparatus (10) and the other one of the profile bars (27) has the fastening device (8), wherein the other profile bar (27) has a cut-out (34) for access to the region of the fastening apparatus (10) located in the interior (41) of the C-profile (26).

21. Roof rail assembly with a roof rail retainer (3) according to one or more of the preceding claims as well as with a roof rail (1) which is fastened by means of the fastening device (8) to the adapter component (5).

22. Vehicle with a roof rail assembly according to one or more of the preceding claims, wherein the roof (48) of the vehicle having at least one roof panel (49) and a lower roof component (52) has a fastening opening (56) into which the bolt element (4) is inserted and with a fastening element (69) which is disposed on or attached to the bolt element (4) and is supported on the underside (63) of the lower roof component (52) so that the supporting element (18), roof panel (49), lower roof component (52) and fastening element (69) as well as optionally the adapter component (5) lie in contact with one another.

23. Vehicle according to one of the preceding claims, **characterized in that** at least one washer (57) is disposed between the underside (63) of the lower roof component (52) and the fastening element (69).

## Revendications

1. Support pour barre de toit (3) comprenant une pièce adaptatrice (5) qui présente un dispositif de fixation (10) pour le montage sur un toit d'un véhicule et un mécanisme de fixation (8) pour le montage d'une barre de toit du véhicule, dans lequel le dispositif de fixation (10) présente un élément de boulon (4) doté de préférence d'un filetage (16, 17) qui est entouré par une bague d'étanchéité (12) pouvant être comprimée, au moins un élément d'appui (18) est attribué à l'élément de boulon (4), lequel repose d'une part sur la pièce adaptatrice (5) ou est relié à la pièce adaptatrice (5) et d'autre part, présente au moins une surface d'appui (66) pouvant être posée sur le toit (48) du véhicule, dans lequel - vu dans le sens axial de l'élément de boulon (4) - l'épaisseur (47) de la bague d'étanchéité (12) non comprimée est supérieure à la longueur d'appui (45) de l'élément d'appui (18), la longueur d'appui (45) correspond à l'épaisseur de l'élément d'appui (18), la bague d'étanchéité (12) ou la bague d'étanchéité (12) conjointement avec l'élément d'appui (18) est disposée dans un creux (38) de la pièce adaptatrice (5), et dans lequel la profondeur (46) du creux (38) est aussi grande que la longueur d'appui (45) de l'élément d'appui (18).

2. Support pour barre de toit selon la revendication 1, **caractérisé en ce que** l'élément de boulon (4) est un boulon prisonnier (4'), une barre filetée ou une vis filetée (4").

3. Support pour barre de toit selon l'une des revendications précédentes, **caractérisé en ce que** l'élément d'appui (18) est disposé entre l'élément de boulon (4) et la bague d'étanchéité (12).

4. Support pour barre de toit selon l'une des revendications précédentes, **caractérisé en ce que** l'élément d'appui (18) entoure l'élément de boulon (4) en formant un anneau.

5. Support pour barre de toit selon l'une des revendications précédentes, **caractérisé en ce que** la bague d'étanchéité (12) entoure l'élément d'appui (18), en particulier l'élément d'appui (18) annulaire.

6. Support pour barre de toit selon l'une des revendications précédentes, **caractérisé en ce que** l'élément d'appui (18) est fixé sur l'élément de boulon (4) ou est formé d'un seul tenant avec l'élément de boulon (4).

7. Support pour barre de toit selon l'une des revendications précédentes, **caractérisé en ce que** l'élément d'appui (18) est une bride (19) de l'élément de boulon (4).

8. Support pour barre de toit selon l'une des revendications précédentes, **caractérisé en ce que** l'élément de boulon (4) est conçu en tant que boulon double (13).

9. Support pour barre de toit selon l'une des revendications précédentes, **caractérisé en ce que** le boulon double (13) présente deux tronçons de boulon (14, 15) dotés respectivement d'un filetage (16, 17), dans lequel la bride (19) repose entre les tronçons de boulon (14, 15).

10. Support pour barre de toit selon l'une des revendications précédentes, **caractérisé en ce que** l'élément d'appui (18) est un élément annulaire placé sur l'élément de boulon (4).

11. Support pour barre de toit selon l'une des revendications précédentes, **caractérisé en ce que** l'élément d'appui (18) est fixé sur la pièce adaptatrice (5) ou est formé d'un seul tenant avec la pièce adaptatrice (5).

12. Support pour barre de toit selon l'une des revendications précédentes, **caractérisé en ce que** le creux (38) est une empreinte de la pièce adaptatrice (5).

13. Support pour barre de toit selon l'une des revendications précédentes, **caractérisé en ce que** la pièce adaptatrice (5) présente une surface d'appui (67) pour s'appuyer sur le toit (48) du véhicule.

14. Support pour barre de toit selon l'une des revendications précédentes, **caractérisé en ce que** l'élément de boulon (4) est fixé sur la pièce adaptatrice au moyen d'une fixation vissée (68).

15. Support pour barre de toit selon l'une des revendications précédentes, **caractérisé en ce que** la fixation vissée (68) est un écrou serti (11) fixé sur la pièce adaptatrice (5), rivet, en particulier un rivet borgne (80), fixé sur la pièce adaptatrice (5) ou un écrou à sertir, en particulier un écrou à sertir borgne (90) fixé sur la pièce adaptatrice (5).

16. Support pour barre de toit selon l'une des revendications précédentes, **caractérisé en ce que** la pièce adaptatrice (5) est une pièce en tôle (25).

17. Support pour barre de toit selon l'une des revendications précédentes, **caractérisé en ce que** la pièce en tôle (25) est un profilé en C (26).

18. Support pour barre de toit selon l'une des revendications précédentes, **caractérisé en ce que** le profilage en C du profilé en C (26) est produit par mettre la pièce de tôle (25) sur l'arête.

19. Support pour barre de toit selon l'une des revendications précédentes, **caractérisé en ce que** le mécanisme de fixation (8) repose décalé par rapport au dispositif de fixation (10), dans le sens longitudinal du profilé en C (26).

20. Support pour barre de toit selon l'une des revendications précédentes, **caractérisé en ce que** le profilé en C (26) présente deux montants profilés (27, 28) et qu'un des montants profilés (28) présente le dispositif de fixation (10) et l'autre des montants profilés (27) présente le mécanisme de fixation (8), dans lequel l'autre montant profilé (27) présente un évidement (34) pour accéder à la partie du dispositif de fixation (10) située à l'intérieur (41) du profilé en C (26).

21. Agencement de barre de toit comprenant une barre de toit (3) selon l'une ou plusieurs des revendications précédentes ainsi qu'une barre de toit (1) qui est fixée sur la pièce adaptatrice (5) au moyen du mécanisme de fixation (8).

22. Véhicule comprenant un agencement de barre de toit selon l'une ou plusieurs des revendications précédentes, dans lequel le toit (48) du véhicule présentant au moins une tôle de toit (49) et une pièce de sous-toit (52), présente une ouverture de fixation (56) dans laquelle l'élément de boulon (4) est enchâssé et avec un élément de fixation (69) disposé ou placé sur l'élément de boulon (4), qui s'appuie sur le bloc pour poser l'élément d'appui (18), de la tôle de toit (49), de la pièce de sous-toit (52) et de l'élément de fixation (69) ainsi qu'en option de la pièce adaptatrice (5) sur la sous-face (63) de la pièce de sous-toit (52).

23. Véhicule selon l'une ou plusieurs des revendications précédentes, **caractérisé en ce qu'**au moins une rondelle d'appui (57) est disposée entre la sous-face (63) de la pièce de sous-toit (52) et l'élément de fixation (69).
